# EUROPEAN PATENT APPLICATION

(11) **EP 1 990 704 A2**
(43) Date of publication of application: **12.11.2008**
(21) Application number: 08151363.2
(22) Date of filing: 13.02.2008
(51) Int. Cl.: G06F 1/32

(54) **Video apparatus operating according to grip of user and control method thereof**

(30) Priority: 07.05.2007 KR 20070044024
(71) Applicant: Samsung Electronics Co., Ltd., Suwon-si, Gyeonggi-Do (KR)
(72) Inventor: Park, Bo-eun 126-902, Jangan Town Kunyoung Apartment, Seongnam-si Gyeonggi-do (KR)
(74) Representative: Grünecker, Kinkeldey, Stockmair & Schwanhäusser Anwaltssozietät

(57) **Abstract**

A video apparatus that is operated according to whether it is being gripped by a user, and an operation control method of the video apparatus. The video apparatus may detect whether it is being gripped by a user, and may be appropriately operated according to a result of detection. Therefore, user convenience can be improved, and entertainment can be enhanced.

## Description

### BACKGROUND OF THE INVENTION

### 1. Field of the Invention

Aspects of the present invention relate to a video apparatus and an operation control method thereof. More particularly, aspects of the present invention relate to a video apparatus capable of playing back video and an operation control method thereof.

### 2. Description of the Related Art

Video apparatuses equipped with touch screens that provide more convenient user interfaces (Uls) have recently become common.

Video apparatuses equipped with touch screens are generally portable, so that users usually carry the video apparatuses in pockets or bags. In this situation, if an object contacts a touch screen in a manner not intended by the user, the video apparatus may perform unintended operations, causing power of the video apparatus to be consumed unnecessarily.

In order to solve the above problem, video apparatuses may be provided with a LOCK switch. If a lock switch is turned on, a video apparatus will not perform any operation even if contact is detected on the touch screen.

However, users may experience inconvenience due to the lock switch operation. Additionally, if users forget to set the lock switch, the lock switch function will not be utilized.

### SUMMARY OF THE INVENTION

Aspects of the present invention provide a video apparatus that is appropriately operated according to whether or not the video apparatus is being gripped by a user, and an operation control method of the video apparatus.

According to an embodiement of the present invention, there is provided a video apparatus including a touch screen to display at least one of video and information, and to receive a command input via touch by a user; a detector to detect contact with the user; and a controller to execute the command input through the touch screen when contact with the user is detected by the detector, and not to execute the command input through the touch screen when contact with the user is not detected by the detector.

According to an aspect of the present invention, if the detector detects contact with the user, the controller may control a display state of the touch screen to be changed.

According to an aspect of the present invention, if the detector detects contact with the user, the controller may control at least one of the brightness of the backlight of the touch screen, the brightness of content displayed on the touch screen, and content displayed on the touch screen to be changed.

According to an aspect of the present invention, the detector may be disposed on a region of a case of the video apparatus in contact with a user' s hand when the user grips the video apparatus.

According to an aspect of the present invention, the detector may detect contact with the user, using at least one of an infrared sensor to detect infrared rays emitted from the user, a temperature sensor to detect a user's temperature, a fingerprint recognition sensor to recognize a user's fingerprints, and an electromagnetic sensor to sense an electric current flowing through the user's body.

According to another embodiment of the present invention, there is provided an operation control method of a video apparatus, the method including detecting whether a user is in contact with a case of the video apparatus; executing a command input through a touch screen when contact with the user is detected; and not executing the command input through the touch screen when contact with the user is not detected.

According to an aspect of the present invention, the method may further include changing a display state of the touch screen if contact with the user is detected.

According to an aspect of the present invention, the changing may include changing at least one of the brightness of the backlight of the touch screen, the brightness of content displayed on the touch screen, and content displayed on the touch screen, if the detector detects contact with the user.

According to an aspect of the present invention, the detecting may include detecting contact with the user using a sensor disposed at a region of the case of the video apparatus in contact with a user' s hand when the user grips the video apparatus.

According to an aspect of the present invention, the detecting may include detecting contact with the user using at least one of an infrared sensor to detect infrared rays emitted from the user, a temperature sensor to detect a user's temperature, a fingerprint recognition sensor to recognize a user's fingerprints, and an electromagnetic sensor to sense an electric current flowing through the user's body.

According to another embodiment of the present invention, there is provided a video apparatus including a display to display video and information; a detector to detect contact with a user; and a controller to control a display state of the display to be changed, if contact with the user is detected by the detector.

According to an aspect of the present invention, if the detector detects contact with the user, the controller may control at least one of the brightness of the backlight of the touch screen, the brightness of content displayed on the touch screen, and content displayed on the touch screen to be changed so that the display state of the display is changed.

According to an aspect of the present invention, the detector may be disposed at a region of a case of the video apparatus in contact with a user' s hand when the user grips the video apparatus.

According to an aspect of the present invention, the detector may detect contact with the user, using at least one of an infrared sensor to detect infrared rays emitted from the user, a temperature sensor to detect a user's temperature, a fingerprint recognition sensor to recognize a user's fingerprints, and an electromagnetic sensor to sense an electric current flowing through the user's body.

According to another embodiment of the present invention, there is provided an operation control method of a video apparatus, the method including detecting whether a user is in contact with a case of the video apparatus; and changing a display state of a display if contact with a user is detected.

According to an aspect of the present invention, the changing may include controlling at least one of the brightness of the backlight of the touch screen, the brightness of content displayed on the touch screen, and content displayed on the touch screen to be changed so that the display state of the display is changed.

According to an aspect of the present invention, the detecting may include detecting contact with the user using a sensor disposed at a region of a case of the video apparatus in contact with a user' s hand when the user grips the video apparatus.

According to an aspect of the present invention, the detecting may include detecting contact with the user using at least one of an infrared sensor to detect infrared rays emitted from the user, a temperature sensor to detect a user's temperature, a fingerprint recognition sensor to recognize a user's fingerprints, and an electromagnetic sensor to sense an electric current flowing through the user's body.

Additional aspects and/or advantages of the invention will be set forth in part in the description which follows and, in part, will be obvious from the description, or may be learned by practice of the invention.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 is a block diagram of a video apparatus according to an embodiment of the present invention;
FIGS. 2A to 2E show regions of a video apparatus case on which a detector of FIG. 1 may be disposed;
FIG. 3 is a flowchart explaining an operation control method of the video apparatus shown in FIG. 1; and
FIGS. 4A and 4B are views for explaining in detail the operation control method of FIG. 3.

### DETAILED DESCRIPTION OF THE EMBODIMENTS

Reference will now be made in detail to the present embodiments of the present invention, examples of which are illustrated in the accompanying drawings, wherein like reference numerals refer to the like elements throughout. The embodiments are described below in order to explain the present invention by referring to the figures.

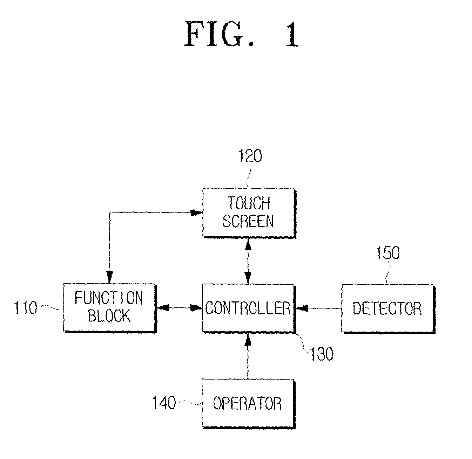

FIG. 1 is a block diagram of a video apparatus according to an embodiment of the present invention. The video apparatus may detect whether the video apparatus is being gripped by a user, and may be appropriately operated according to a result of detection.

As shown in FIG. 1, the video apparatus according to an embodiment of the present invention includes a function block 110, a touch screen 120, a controller 130, an operator 140 and a detector 150.

The function block 110 performs original functions of the video apparatus. For example, if the video apparatus includes a Motion Pictures Experts Group layer 3 (MP3) player, the function block 110 can play back and output audio files. If the video apparatus includes a personal multimedia player (PMP), the function block 110 can play back and output moving images, still images and audio files. Additionally, if the video apparatus includes a digital camera or a digital camcorder, the function block 110 can store captured video and play back and output the stored video.

The touch screen 120 may serve as a display on which video and information are displayed, and may also serve as a user interface (UI) that detects when a point on the touch screen is touched by a user, such as when the user inputs a user command, and transmits the result of the detection to the controller 130.

The operator 140 includes buttons, switches or the like through which a user inputs specific commands. The operator 140 is used as a physical UI to transmit the input user command to the controller 130.

The detector 150 detects whether or not a user is gripping a video apparatus case (that is, whether a user is holding the video apparatus case in his or her hand). For this, the detector 150 detects whether or not a body part of the user, such as, for example, a hand, is in contact with the video apparatus case, and transmits the result of detection to the controller 130.

Specifically, the detector 150 may detect whether the user is in contact with the video apparatus case using one of an infrared sensor, a temperature sensor, a fingerprint recognition sensor, an electromagnetic sensor, or a combination thereof.

The infrared sensor detects infrared rays emitted from the user, the temperature sensor detects a user's temperature, the fingerprint recognition sensor recognizes a user's fingerprints, and the electromagnetic sensor senses an electric current flowing through the user's body, in order to determine whether the user is in contact with the video apparatus case.

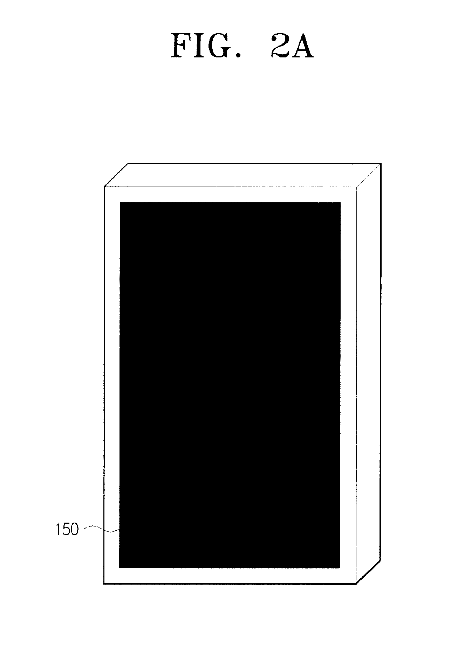

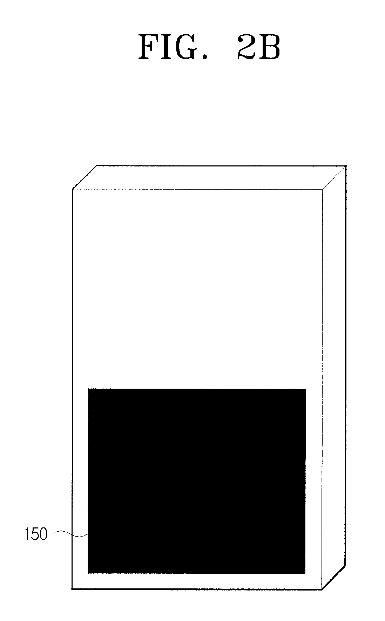

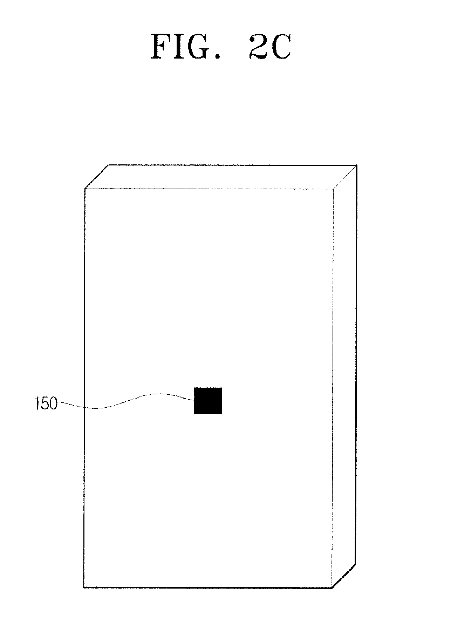

The detector 150 may be disposed anywhere on the video apparatus case. As non-limiting examples, the detector 150 may be on a front surface, a rear surface or side surfaces of the video apparatus case. For example, the detector 150 may be disposed on the rear surface of the video apparatus case, as shown in FIGS. 2A to 2C. If the detector 150 is disposed as shown in FIG. 2A, a greater number of sensors may be required than when the detector 150 is disposed as shown in FIGS. 2B or 2C. Additionally, if the detector 150 is disposed as shown in FIG. 2B, a greater number of sensors may be required than when the detector 150 is disposed as shown in FIG. 2C.

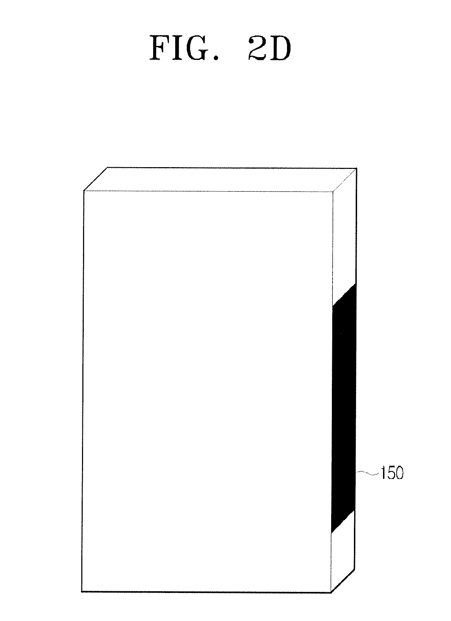

The detector 150 may be disposed on the side surface of the video apparatus case as shown in FIG. 2D. Additionally, although not shown in the drawings, the detector 150 may be disposed on the front surface of the video apparatus case.

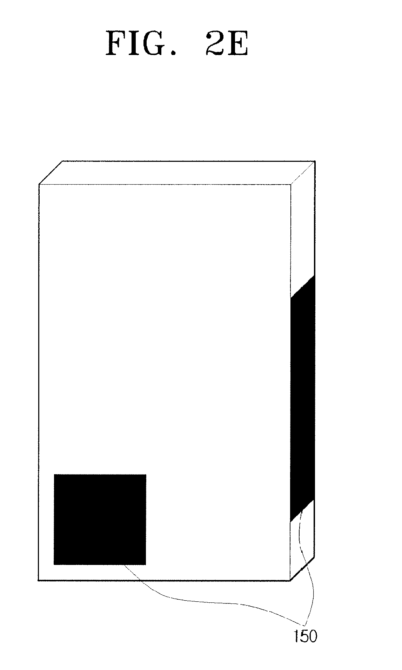

In addition, the detector 150 may be disposed on the front and the side surfaces of the video apparatus case, as shown in FIG. 2E. In other words, the detector 150 may be disposed on two or more surfaces of the video apparatus case.

As described above, there is no limitation to regions on the video apparatus case on which the detector 150 is disposed, so the position of the detector 150 can be set according to the method by which the user grips the video apparatus. In other words, the detector 150 may be placed on a region of the video apparatus that contacts the user's hand when the user grips the video apparatus. For example, if the user's hand is in contact with the side surfaces and the rear surface of the video apparatus when the user grips the video apparatus, a sensor may be disposed on at least one of the above surfaces. The detector may be placed to detect a user's hand regardless of whether the user is right-handed or left-handed.

The controller 130 executes the user commands input through the touch screen 120 or the operator 140. In order to execute the user commands, the controller 130 may control the operation of the function block 110, and may display specific information on the touch screen 120. Specifically, the controller 130 may control operations of an on-screen-display (OSD) generator or a graphical user interface (GUI) generator that is provided in the function block 110, so that specific information can be displayed on the touch screen 120.

The user may be required to grip the video apparatus in order to execute the user commands using the controller 130. In other words, the controller 130 may be configured to execute user commands input through the touch screen 120 or the operator 140 only when contact with the user is detected by the detector 150. When contact with the user is not detected by the detector 150, the controller 130 may be prevented from executing the user commands even if the user commands are input through the touch screen 120 or the operator 140.

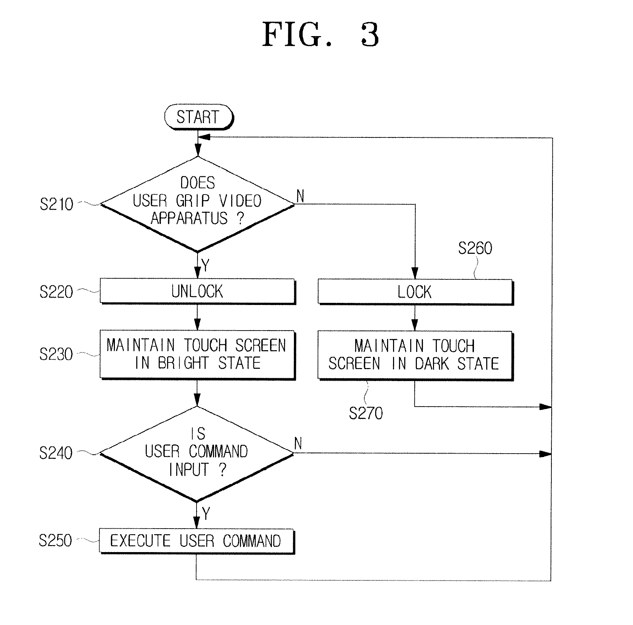

If the detector 150 detects contact with the user, the controller 130 may change a display state of the touch screen 120. A process of changing the display state of the touch screen 120 will be described in detail with reference to FIG. 3, which is a flowchart explaining an operation control method of the video apparatus shown in FIG. 1.

As shown in FIG. 3, the controller 130 detects in operation S21 0 whether a user is gripping the video apparatus. Specifically, the controller 130 determines whether the user's hand is in contact with the detector 150 based on a result of detection of the detector 150 in operation S210. Accordingly it is possible to detect whether a user is gripping the video apparatus.

If the controller 130 detects in operation S210-Y that the user is gripping the video apparatus, the controller 130 may unlock the touch screen 120 and the operator 140 in operation S220. The controller 130 may then maintain the touch screen 120 in an operational state, such as, for example, a bright state, in operation S230.

In order to maintain the touch screen 120 in a bright state in operation S230, the controller 230 may control a backlight unit (not shown) to emit bright backlight to the touch screen 120.

Subsequently, if the user inputs commands through the touch screen 120 or the operator 140 in operation S240-Y, the controller 130 may execute the input user commands in operation S250.

If the controller 130 detects in operation S210-N that the user is not gripping the video apparatus, the controller 130 may lock the touch screen 120 and the operator 140 in operation S260.

As a result of performing operation S260, the controller 130 may be prevented from executing input user commands, even if the user commands are input through the touch screen 120 or the operator 140. The controller 130 may then maintain the touch screen 120 in a non-operational state, such as, for example, a dark state in operation S270. In order to maintain the touch screen 120 in a dark state in operation S270, the controller 230 may control a backlight unit (not shown) not to emit backlight to the touch screen 120.

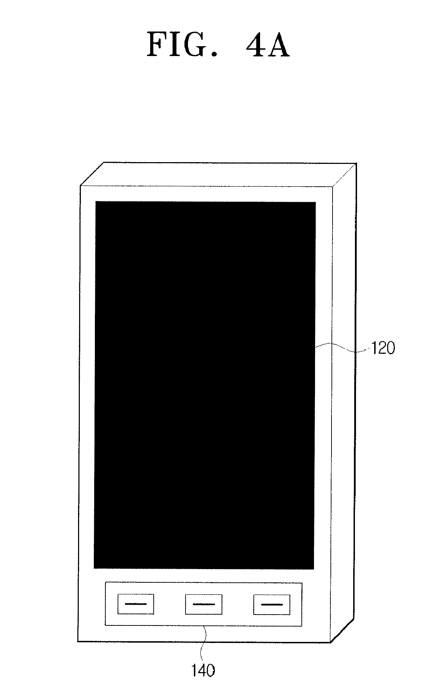

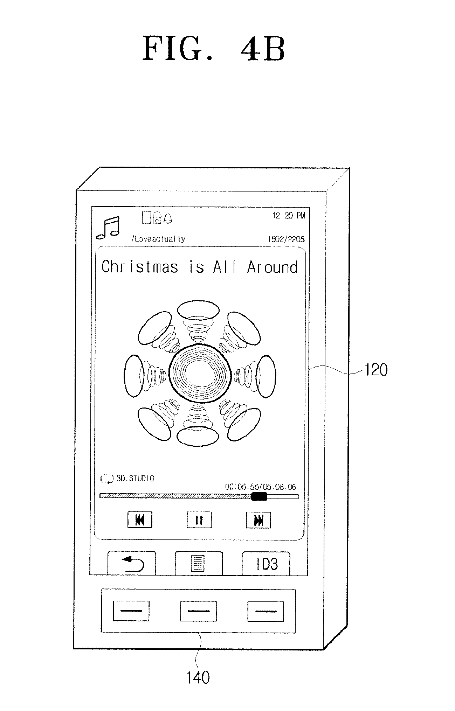

FIG. 4A shows the video apparatus in which the touch screen 120 appears dark after operation S270 is performed, and FIG. 4B shows the video apparatus in which the touch screen 120 appears bright after operation S230 is performed.

According to aspects of the present invention, when the user grips the video apparatus, the touch screen 120 and operator 140 are unlocked and the touch screen 120 is maintained in the bright state, but the present invention is not limited to such a configuration. As a further, non-limiting example, if the user grips the video apparatus, the touch screen 120 and operator 140 may be unlocked without maintaining the touch screen 120 in the bright state. As a further, non-limiting example, if the user grips the video apparatus, the touch screen 120 may be maintained in the bright state without unlocking the touch screen 120 and operator 140.

Furthermore, if the user grips the video apparatus, the display state of the touch screen 120 can be changed.

Additionally, if the brightness of the backlight of the touch screen 120 is changed, or if the brightness of content (such as video or text) displayed on the touch screen 120 is changed, the display state of the touch screen 120 may be changed.

In addition, if content displayed on the touch screen 120 is changed, the display state of the touch screen 120 may be changed. For example, if the user grips the video apparatus, a specific guide, a specific list or a specific menu may be displayed on the touch screen 120, or a pointer, a highlighter or a cursor may appear on the touch screen 120, or the lyrics of songs may be displayed on the touch screen 120, so that the display state of the touch screen 120 can be changed. As a non-limiting example, if the touch screen is displaying a video, gripping the apparatus may cause a menu including functions such as stop, pause, fast forward and rewind to appear on the touch screen while continuing to display the video.

In the embodiment of the present invention, the touch screen is used as a means for displaying video and information, but the present invention is not limited thereto. Accordingly, for convenience of description, a general screen (namely, a display), not the touch screen, may be used in the embodiment of the present invention.

There are no restrictions on the kind of the apparatus to which aspects of the present invention are applicable. Accordingly, aspects of the present invention may be applicable to an audio player such as an MP3 player; a video player such as a PMP; a photographing apparatus, such as a digital camera and a digital camcorder, to photograph video; a mobile phone; a game machine; or an electronic dictionary.

As described above, according to the embodiment of the present invention, the video apparatus may detect whether the user grips the video apparatus, and the video apparatus may be appropriately operated according to the result of detection. The video apparatus may then perform various operations. Accordingly, it is not necessary for the user to operate the video apparatus several times, and thus user convenience can be improved. Additionally, the video apparatus react only when it is being gripped by the user, so the effect for increasing user's entertainment can be achieved.

Although a few embodiments of the present invention have been shown and described, it would be appreciated by those skilled in the art that changes may be made in this embodiment without departing from the principles and spirit of the invention, the scope of which is defined in the claims and their equivalents.

## Claims

1. A video apparatus comprising:
a touch screen to display at least one of video and information, and to receive a command input via touch by a user;
a detector to detect contact with the user; and
a controller to execute the command input through the touch screen when contact with the user is detected by the detector, and not to execute the command input through the touch screen when contact with the user is not detected by the detector.

2. The video apparatus according to claim 1, wherein, if the detector detects contact with the user, the controller controls and/or changes a display state of the touch screen.

3. The video apparatus according to claim 2, wherein, if the detector detects contact with the user, the controller controls and/or changes at least one of the brightness of the backlight of the touch screen, the brightness of content displayed on the touch screen, and content displayed on the touch screen to be changed.

4. The video apparatus according to claim 1, wherein the detector is disposed on at least one region of a case of the video apparatus in contact with a hand of the user when the user grips the video apparatus.

5. The video apparatus according to claim 4, wherein the detector is disposed on more than one region of the case of the video apparatus and wherein the detector detects whether the user contacts each region.

6. The video apparatus according to claim 1, wherein the detector detects contact with the user using at least one of an infrared sensor to detect infrared rays emitted from the user, a temperature sensor to detect a temperature of the user, a fingerprint recognition sensor to recognize fingerprints of the user, and an electromagnetic sensor to sense an electric current flowing through the user's body.

7. An operation control method of a video apparatus, the method comprising:
detecting whether a user is in contact with a case of the video apparatus;
executing a command input through a touch screen when contact with the user is detected; and
not executing the command input through the touch screen when contact with the user is not detected.

8. The method according to claim 7, further comprising changing a display state of the touch screen if contact with the user is detected.

9. The method according to claim 8, wherein the changing of a display state comprises changing at least one of a brightness of a backlight of the touch screen, a brightness of content displayed on the touch screen, and content displayed on the touch screen.

10. The method according to claim 7, wherein the detecting comprises detecting contact with the user using a sensor disposed at a region of the case of the video apparatus that contacts a hand of the user when the user grips the video apparatus.

11. The method according to claim 7, wherein the detecting comprises detecting contact with the user using a sensor disposed at more than one region of the case of the video apparatus that contacts a hand of the user when the user grips the video apparatus.

12. The method according to claim 7, wherein the detecting comprises detecting contact with the user using at least one of an infrared sensor to detect infrared rays emitted from the user, a temperature sensor to detect a temperature of the user, a fingerprint recognition sensor to recognize fingerprints of the user, and an electromagnetic sensor to sense an electric current flowing through the user's body.

13. A video apparatus comprising:
a display to display video and information;
a detector to detect contact with a user; and
a controller to control and/or change a display state of the display if contact with the user is detected by the detector.

14. The video apparatus according to claim 13, wherein, if the detector detects contact with the user, the controller controls at least one of a brightness of the display, the brightness of content displayed on the display, and content displayed on the display to be changed by action of the user.

15. The video apparatus according to claim 13, wherein the detector is disposed at a region of a case of the video apparatus that contacts a hand of the user when the user grips the video apparatus.

16. The video apparatus according to claim 13, wherein the detector is disposed at more than one region of a case of the video apparatus that contacts a hand of the user when the user grips the video apparatus.

17. The video apparatus according to claim 13, wherein the detector detects contact with the user, using at least one of an infrared sensor to detect infrared rays emitted from the user, a temperature sensor to detect a temperature of the user, a fingerprint recognition sensor to recognize fingerprints of the user, and an electromagnetic sensor to sense an electric current flowing through the user's body.

18. An operation control method of a video apparatus, the method comprising:
detecting whether a user is in contact with a case of the video apparatus; and
changing a display state of a display if contact with the user is detected.

19. The method according to claim 18, wherein the changing of the display state comprises controlling at least one of a brightness of a backlight of a touch screen of the video apparatus, a brightness of content displayed on the touch screen, and content displayed on the touch screen to be changed by action of the user.

20. The method according to claim 18, wherein the detecting comprises detecting contact with the user using a sensor disposed at a region of a case of the video apparatus in contact with a hand of the user when the user grips the video apparatus.

21. The method according to claim 20, wherein the detecting comprises detecting contact with the user using a sensor disposed at more than one region of a case of the video apparatus in contact with a hand of the user when the user grips the video apparatus.

22. The method according to claim 18, wherein the detecting comprises detecting contact with the user using at least one of an infrared sensor to detect infrared rays emitted from the user, a temperature sensor to detect a temperature of the user, a fingerprint recognition sensor to recognize fingerprints of the user, and an electromagnetic sensor to sense an electric current flowing through the user's body.
